# EUROPEAN PATENT SPECIFICATION

(11) **EP 4 390 530 B1**
(45) Date of publication and mention of the grant of the patent: **01.07.2026**
(21) Application number: 22215233.2
(22) Date of filing: 20.12.2022
(51) Int. Cl.: G02F 1/1506

(54) **AN ELECTROCHROMIC DEVICE**
EINE ELEKTROCHROME VORRICHTUNG
UN DISPOSITIF ELECTROCHROMIQUE

(43) Date of publication of application: 26.06.2024
(73) Proprietor: Imec VZW, 3001 Leuven (BE)
(72) Inventor: DE TAEYE, Louis, 2800 Mechelen (BE); VEREECKEN, Philippe, 3321 Hoegaarden (BE)
(74) Representative: AWA Sweden AB

(56) References cited:
- WO-A1-2014/134120
- US-A1- 2016 085 126
- US-A1- 2016 209 722
- US-A1- 2016 343 552

## Description

### Technical field

The present description relates to the field of electrochromic devices.

More particularly, the present description relates to an electrochromic device and a method for changing the transmittance through an electrochromic device.

### Background

Electrochromic devices are used in various field, such as smart windows, sensors and displays. The working principle of the device is that the optical properties of layers of materials are modified through changes in the oxidation state of chemical elements in the layer. The oxidation state is driven by an ion insertion reaction, wherein ions move through the layers of material and electrons are transported through an external circuit. At least one of the layers is a chromoactive layer, which changes optical extinction, upon reduction or oxidation. To enable facile electron transfer to and from the external circuit, there are layers of current collectors in contact with the chromoactive layer. The current collectors are assumed to not participate in the electrochemical reactions nor change their optical properties during operation of the device.

The total change in transmission through a layer is determined by both the optical extinction coefficient and layer thickness. The change in optical extinction of a chromoactive material, due to an electrochemical reaction, is often limited, such that at a given wavelength the change in optical extinction coefficient is often limited, and further the extinction coefficient typically only changes for some wavelengths making the layers change color rather than turning opaque. Consequently, the layers have to be sufficiently thick to ensure a sufficiently large change in the transmittance of the layers. This limits the rate at which the device can be switched. To fully reduce/oxidize the layers, Li-ions have to diffuse through the whole layer thickness. As the diffusion coefficient of Li-ions is generally limited in active materials, this limits the rate at which the device can be switched. Consequently, a trade-off needs to be made between switching speed and change in transmittance.

Thus, there is a need in the art for improved electrochromic devices with an improved ability to switch transparency faster and over a broader part of the optical spectrum.

WO2014/134120 discloses an electrochromic device including a stack of film layers that is switchable between a reflective state and a transparent state through application of electrical potential across the stack.

US 2016/0085126 discloses an electrochromic device comprising a single electrochromic diode allowing the insertion and the de insertion of metal ions. Further relevant prior art is described in US 2016/209722 A1 and US 2016/343552 A1.

### Summary

It is an object of the present description to at least partly overcome one or more limitations of the prior art. It is an object to provide an electrochromic device which can provide fast switching of its transparency. It is a further object to provide an electrochromic device which can provide a large change in optical transmittance. It is a further object to provide an electrochromic device which can provide a large change in optical transmittance in a broad wavelength range.

This and other objects are at least partly met by the invention as defined in the independent claims. Preferred embodiments are set out in the dependent claims.

As a first aspect, there is provided an electrochromic device comprising:
a first portion comprising a first chromoactive material;
a second portion comprising a second chromoactive material;
a solid-state electrolyte;
wherein the first portion and the second portion are arranged on opposite sides of the electrolyte;
wherein the first chromoactive material and the second chromoactive material are configured to change oxidation states in response to an applied current, wherein reaction products are generated in the second chromoactive material during the change in oxidation state, wherein the electrolyte is configured to constrain the volume expansion of the reaction products in a direction perpendicular to an interface between the second portion and the electrolyte, and wherein the hardness of the electrolyte is greater than the hardness of the reaction products.

The electrochromic device may be an electrochromic device for integration into a larger device or surface, such as a window. Thus, the electrochromic device may be part of or integrated into a window of any size. The electrochromic device may be part of one layer of a multi-layered window or it may be a part of a one layer window. It may also be part of a plurality of layers in a multi-layered window. Moreover, the electrochromic device may be a sensor. As a sensor, it may be integrated into other structures.

The electrochromic device is configured such that the optical transmittance and/or the color of the device is changed upon change in oxidation state of the first chromoactive material and the second chromoactive material.

The change in transmission through a material is determined by both the extinction coefficient and layer thickness. The extinction coefficient and thus the change in optical extinction may often be limited. The electrochromic device is configured such that it is possible to use a device with a small thickness. In other words, the device is configured to have a large change in extinction coefficient, making it possible to have a high change in transmittance through the device while yet having a thin device. The device may have a thickness of 20-5000 nm.

The first portion may comprise several materials. The first portion may comprise a stack of materials. However, an advantage of the present invention is that it does not require the first portion to comprise several materials. The first portion may have a thickness of 5-200 nm. The first portion may be a thin film. The first portion may have a size from mm² ranges to m² ranges, depending on the use of the electrochromic device.

The first portion may be configured as an anode or a cathode during the operation of the device.

The first chromoactive material changes oxidation state in response to an applied current.

The first chromoactive material may be oxidized and coincidingly provide ions for transportation through the electrolyte to the second chromoactive material. The first chromoactive material may on the other hand reduce and coincidingly receive ions from the second chromoactive material during operation. The first chromoactive material may change its optical transmittance depending on the oxidation state of the constituent chemical elements. The first chromoactive material may change in color depending on the oxidation state. In other words, the optical absorbance of the first chromoactive material is changed when the oxidation state is changed.

The second portion may comprise several materials. The second portion may comprise a stack of materials. However, an advantage of the present invention is that it does not require the second portion to comprise several materials. The second portion may have a thickness of 5-2000 nm. The second portion may be a thin film. The second portion may have a size of from mm² ranges to m² ranges, depending on the use of the electrochromic device.

The second portion may be configured as an anode or a cathode during the operation of the device.

The second chromoactive material changes oxidation state in response to an applied current.

The second chromoactive material may oxidize and coincidingly provide ions for transportation through the electrolyte to the first chromoactive material. The second chromoactive material may on the other hand reduce and coincidingly receive ions from the first chromoactive material during operation. The second chromoactive material may change its optical transmittance depending on the oxidation state of the constituent chemical elements. The second chromoactive material may change in color depending on the oxidation state.

During the change in oxidation state, reaction products are generated in the second chromoactive material. The reaction products may be metallic particulates. The reaction products may be other particles formed during oxidation. The reaction products may have a small size, such as a size below a radius of 100 nm. An advantage of having small size reaction products is that the distribution of the reaction products is more homogenous than with larger reaction products. The reaction products may create a thin film between the second chromoactive material and the electrolyte. A more homogenous distribution of reaction products may lead to a more homogenous film, having better optical properties.

If the reaction products are metallic particulates, the particulates may form a metallic film. The metallic film may be formed at the surface between the second chromoactive material and the electrolyte. The metallic film may further be formed within the second chromoactive layer.

The electrolyte is configured to constrain the volume expansion of the reaction products in a direction perpendicular to an interface between the second portion and the electrolyte. In other words, the electrolyte restricts the volume growth of the reaction products into other materials of the device. The constrained volume of the reaction products may lead to a homogenous distribution of the reaction products over the surface of the second chromoactive material. An advantage is that the homogenous distribution of the reaction products increases the change in optical transmittance or the change in color. In other words, the constrained volume leading to a homogenous distribution of the reaction products alters the optical transmittance of the electrochromic device substantially. Thus, the volume constrained reaction products are an active part of changing the optical transmittance of the electrochromic device.

The constrained volume may lead to a homogenous distribution of the reaction products, which in turn leads to an increased change in optical transmittance. By this, the portions of the electrochromic device may be made thinner. By this, the electrochromic device may switch in transparency or color faster, since thinner portions allow for a shorter distance for the ions to diffuse. A further advantage is that the substantial change in optical transmittance occurs across a broad optical spectrum, for example at wavelengths in the range between 350 nm and 750 nm. For example, the optical transmittance may be reduced from 80% - 99% to 1% - 20%, e.g. to less than 10 %.

The first portion and the second portion are arranged on opposite sides of the electrolyte. Thus, the first portion and the second portion may sandwich the electrolyte.

The electrolyte is a solid-state electrolyte. This may be advantageous, since the constraint of the volume expansion may be more effective. In other words, the constraint of the reaction products in a direction perpendicular to the surface of the electrolyte may be more effective.

The hardness of the electrolyte is greater than the hardness of the reaction products. This may be advantageous, since the hardness may be more effective in constraining the volume expansion.

In one embodiment, the first portion may further comprise a first current collector being arranged on the opposite side of the first chromoactive material compared to the electrolyte. The first current collector may provide electrons to the reaction during operation of the device. The first current collector may not participate in the electrochemical reaction, nor change its optical properties during operation of the device.

In one embodiment, the second portion may further comprise a second current collector being arranged on the opposite side of the second chromoactive material compared to the electrolyte. The second current collector may provide or extract electrons to the reaction during operation of the device. The second current collector may not participate in the electrochemical reaction, nor change its optical properties during operation of the device.

In one embodiment, the first current collector and/or the second current collector may be an oxide, such as an electrically conductive oxide. Further, in one embodiment, there may be at least one further current collector in combination with the first current collector and/or the second current collector. The further current collector may be a transparent conductive oxide.

In one embodiment, the second chromoactive layer may be a chromoactive current collector. By this, it should be understood that the chromoative material may also be an electrically conductive layer. In other words, the electrical conductivity of the chromoactive current collector is sufficiently high to allow for electrical conductivity in the material such that no separate current collector is needed. An advantage of this is that the number of materials is reduced, and the device may be made thinner.

In one embodiment, the electrolyte may be lithium phosphorus oxynitride (LiPON) and the second chromoactive material is indium tin oxide (ITO). Thus, according to this embodiment, when a current is applied to the device, reaction products are generated in ITO during the change in oxidation state of indium and tin and coinciding insertion of Li-ions. Then, the LiPON constrains the volume expansion of the reaction products in a direction perpendicular to an interface between the second portion and the electrolyte. The constraining of the volume expansion creates a metallic film, which improves the change in optical transmittance of the ITO. In this case, the film should be understood as densely packed metallic particulates which optically behave as a metallic film. An advantage of this is that a thinner chromoactive material layer can be used, resulting in faster switching of the device. A further advantage of this is that the reduction of transparency may be reduced to 10 % or less over the entire visible spectrum.

In one embodiment, the electrochromic device is a multi-layered structure. Thus, the device is formed by layers. In other words, the first portion, the second portion and the electrolyte are formed by layers.

In one embodiment, the electrochromic device is a thin-film stack. Thus, the first portion, the second portion and the electrolyte may be in the form of thin films. The thin films may each have a thickness of 5 to 500 nm.

According to a second aspect, there is provided a window comprising an electrochromic device according to above.

The window may comprise one or several electrochromic devices. The electrochromic device may allow for user interaction with a window.

According to a third aspect there is provided a method for changing the transmittance through an electrochromic device, the method comprising:
a) receiving a voltage to the electrochromic device to provide electrons to a second electrochromic material;
b) migrating ions between a first chromoactive material through a solid-state electrolyte and to the second chromoactive material as a result of the received voltage, wherein the oxidation states of the first chromoactive material and the second chromoactive material are changed;
c) forming reaction products in the second chromoactive material during the change in oxidation state; and
d) constraining the volume expansion of the reaction products in the direction perpendicular to an interface between the second portion and the electrolyte, wherein the hardness of the electrolyte is greater than the hardness of the reaction products;
wherein during the change of oxidation states the transmittance of the first chromoactive material and/or the second chromoactive material is changed.

The advantages presented in accordance with the device above are equally valid for the method.

The voltage received by the device provides electrons to the second electrochromic material with a coinciding migration of ions from the first chromoactive material through an electrolyte and to the second chromoactive material. During the migration, the oxidation states of the first chromoactive material and the second chromoactive material are changed. During the oxidation reaction, reaction products are formed in the second chromoactive material. The reaction products protrude into the electrolyte. In other words, the reaction products have a volume expansion in a direction perpendicular to an interface between the second chromoactive layer and the electrolyte. The volume expansion is constrained by the electrolyte.

The constrained volume of the reaction products alters the optical transmittance of the electrochromic device. Thus, the volume constrained reaction products are an active part of changing the optical transmittance of the electrochromic device.

In one embodiment, upon receiving the voltage, the first chromoactive material may be oxidized and the second chromoactive material may be reduced and the transmittance of the first chromoactive material and/or the second chromoactive material may be reduced.

In one embodiment, upon receiving the voltage, the first chromoactive material may be reduced and the second chromoactive material may be oxidized and the transmittance of the first chromoactive material and/or the second chromoactive material may be increased.

In other words, the method may be reversed upon the need of the user.

### Brief description of the drawings

The above, as well as additional objects, features and advantages of the present inventive concept, will be better understood through the following illustrative and non-limiting detailed description, with reference to the appended drawings. In the drawings like reference numerals will be used for like elements unless stated otherwise.
Fig. 1 is a side view of an electrochromic device.
Fig. 2 is a side view of an electrochromic device.
Fig. 3 is a perspective view of a second portion of an electrochromic device.
Fig. 4 is a window comprising an electrochromic device.
Fig. 5 is a method for changing the transmittance through an electrochromic device.

### Detailed description

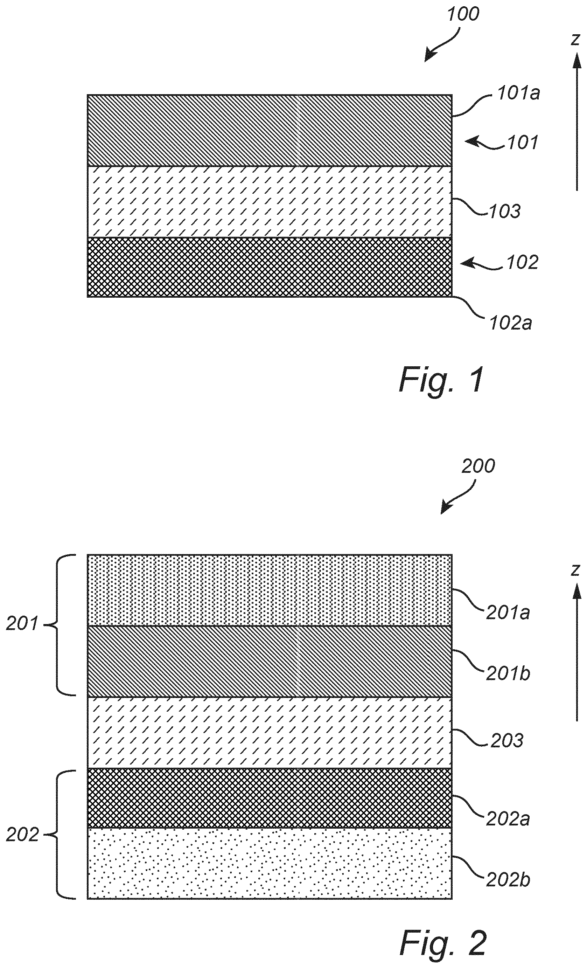

Fig. 1 illustrates a side view of an electrochromic device 100. The electrochromic device 100 comprises a first portion 101 and a second portion 102. The first portion 101 and the second portion 102 are arranged on opposite sides of an electrolyte 103. In other words, the electrolyte 103 is sandwiched between the first portion 101 and the second portion 102. The electrochromic device 100 may be a multi-layered structure. However, it should be understood that the electrochromic device 100 may have another structure than being multi-layered. In one embodiment, the electrochromic device 100 is a thin-film stack. Thus, the first portion 101, the second portion 102 and the electrolyte 103 may be in the form of thin films. The thin films may each have a thickness of 5 to 500 nm.

The electrochromic device 100 may have a thickness of 20-5000 nm.

The first portion 101 comprises a first chromoactive material 101a. The first portion 101 may comprise a stack of materials. This will be discussed more in detail in relation to Fig. 2. The first portion 101 may have a thickness of 50-200 nm. The first portion 101 may be a thin film. The first portion 101 may have a size from mm² ranges to m² ranges, depending on the use of the electrochromic device.

The first portion 101 may be configured as an anode or a cathode during the operation of the electrochromic device 100. The first chromoactive material 101a may provide ions for transportation through the electrolyte 103 to a second chromoactive material 102a which is described below. The first chromoactive material 101a may on the other hand receive ions from the second chromoactive material 102a during operation. The first chromoactive material 101a may change its optical transmittance depending on the oxidation state. The first chromoactive material 101a may change in color depending on the oxidation state. In other words, the optical absorbance of the first chromoactive material 101a is changed when the oxidation state is changed.

The second portion 102 comprises the second chromoactive material 102a. The second portion 102 may comprise a stack of materials. This will be discussed more in detail in relation to Fig. 2. The second portion 102 may have a thickness of 50-200 nm. The second portion 102 may be a thin film. The second portion 102 may have a size from mm² ranges to m² ranges, depending on the use of the electrochromic device.

The second chromoactive material 102a may be a chromoactive current collector. Thus, the second chromoactive material 102a may have a conductivity high enough to allow for transportation of electrons. The second chromoactive material 102a may be indium tin oxide (ITO). The second portion 102 may be configured as an anode or a cathode during the operation of the electrochromic device 100. The second chromoactive material 102a may provide ions for transportation through the electrolyte 103 to the first chromoactive material 101a. The second chromoactive material 102a may on the other hand receive ions from the first chromoactive material 101a during operation. The second chromoactive material 102a may change its optical transmittance depending on the oxidation state. The second chromoactive material 102a may change in color depending on the oxidation state.

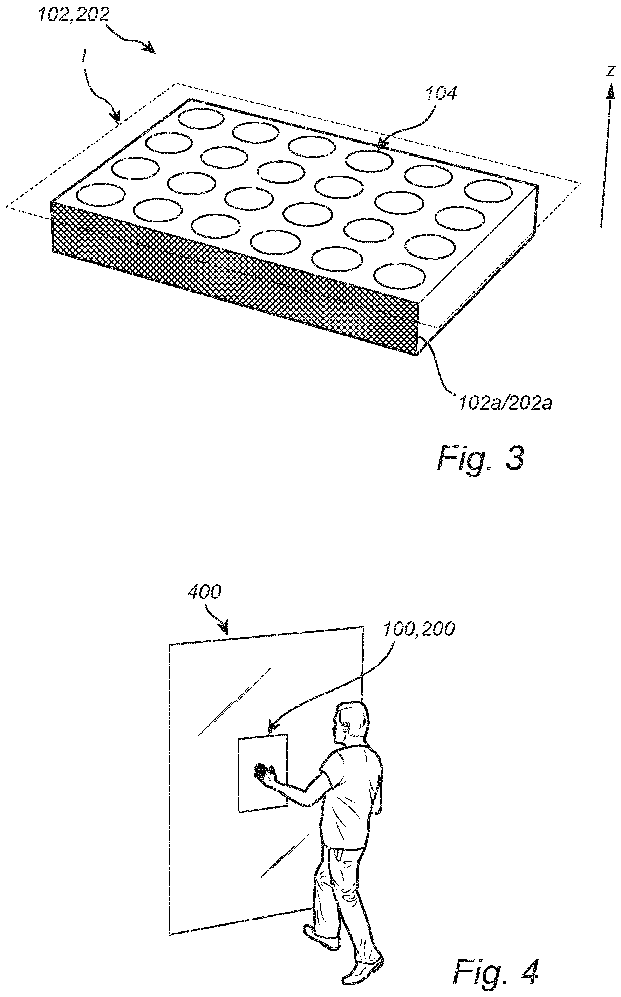

The electrochromic device 100 is configured to change oxidation state of the constituent chemical elements of the first chromoactive material and the second chromoactive material in response to an applied current. During the change in oxidation state, reaction products 104 are generated in the second chromoactive material 102a. Further, the electrolyte 103 is configured to constrain the volume expansion of the reaction products 104 in a direction Z perpendicular to an interface between the second portion 102 and the electrolyte 103. This will be more discussed in relation to Fig. 3.

The electrochromic device 100 is configured such that the optical transmittance and/or the color of the device is changed upon change in oxidation state of the chromoactive materials 101a, 102a.

The electrolyte 103 is a solid-state electrolyte. The hardness of the electrolyte 103 is greater than the hardness of the reaction products. The electrolyte may be lithium phosphorous oxynitride (LiPON).

The electrolyte 103 is configured to constrain the volume expansion of the reaction products 104 in a direction perpendicular to an interface between the second portion 102 and the electrolyte 103. This will be discussed more in detail in relation to Fig. 3.

Fig. 2 illustrates a side view of an electrochromic device 200 according to an embodiment. The electrochromic device 200 comprises a first portion 201 and a second portion 202. The first portion 201 and the second portion 202 are arranged on opposite sides of an electrolyte 203.

The first portion 201 comprises a first chromoactive material 201a. The first chromoactive material 201a shares the features of the first chromoactive material 101a as described in relation to Fig. 1 and will thus not be discussed more in detailed here. The first portion 201 further comprises a first current collector 201b being arranged on the opposite side of the first chromoactive material 201a compared to the electrolyte 203. Thus, the first chromoactive material 201a is arranged between the first current collector 201b and the electrolyte 203.

The first current collector 201b may provide electrons to the reaction during operation of the electrochromic device 200. The first current collector 201b may not participate in the electrochemical reaction, nor change its optical properties during operation of the device.

The first current collector 201b may comprise a binary oxide, such as an electrically conductive oxide. Further, in one embodiment, there may be at least one further current collector in combination with the first current collector 201b. The further current collector may comprise a non-conductive binary oxide. This is not illustrated in Fig. 2, but it should be understood that the relation between the further current collector and the first chromoactive material 201a is the same as between the first current collector 201b and the first chromoactive material 201a, thus the further current collector is arranged on a side of the first chromoactive material 201a facing away from the electrolyte 203.

The second portion 202 comprises a second chromoactive material 202a. The second chromoactive material 202a shares the features of the second chromoactive material 102a as described in relation to Fig. 1 and will thus not be discussed more in detailed here. The second portion 202 further comprises a second current collector 202b being arranged on the opposite side of the second chromoactive material 202a compared to the electrolyte 203. Thus, the second chromoactive material 202a is arranged between the second current collector 202b and the electrolyte 203.

The second current collector 202b may provide electrons to the reaction during operation of the electrochromic device 200. The second current collector 202b may not participate in the electrochemical reaction, nor change its optical properties during operation of the device.

The second current collector 202b may comprise a binary oxide, such as an electrically conductive oxide. Further, in one embodiment, there may be at least one further current collector in combination with the second current collector 202b. The further current collector may comprise a non-conductive binary oxide. This is not illustrated in Fig. 2, but it should be understood that the relation between the further current collector and the second chromoactive material 202a is the same as between the second current collector 202b and the second chromoactive material 202a, thus the further current collector is arranged on a side of the second chromoactive material 202a facing away from the electrolyte 203.

Fig. 3 illustrates a perspective view of the second portion 102, 202 of the electrochromic device 100, 200. The second portion 102, 202 comprises a second chromoactive material 102a, 202a. Further, an interface I is illustrated on top of the second chromoactive material 102a, 202a. For simplicity, no current collector is shown. However, it should be understood that a second current collector 202b could be arranged on the side of the second chromoactive material 102a, 202a facing away from the interface I. Further, the electrolyte 103, 203 is not shown but it should be understood that the electrolyte 103, 203 is arranged on top of and parallel to the interface I.

Further, there is a plurality of reaction products 104. The reaction products 104 are generated in the second chromoactive material 102a, 202a during the change in oxidation state and constrained in volume expansion, in a direction Z perpendicular to an interface I between the second portion 102, 202, and the electrolyte by the electrolyte 103, 203.

The electrolyte 103, 203 (for simplicity not shown in Fig. 3) is configured to constrain the volume expansion of the reaction products 104 in a direction Z perpendicular to an interface I between the second portion 102, 202 and the electrolyte 103, 203. In other words, the electrolyte 103, 203 restricts the volume growth of the reaction products 104 into other materials of the electrochromic device 100. The distribution of the reaction products 104 may be homogenous within the second chromoactive material 102a, 202a. The constrained volume of the reaction products 104, leading to an homogenous distribution of the reaction products, alters the optical transmittance of the electrochromic device 100, 200. Thus, the volume constrained reaction products 104 are an active part of changing the optical transmittance of the electrochromic device 100, 200.

The reaction products 104 may be metallic particulates. The reaction products 104 may be other particles formed during oxidation. The reaction products 104 may have a small size, such as a size below a radius of 100 nm. The reaction products 104 may create a thin film between the second chromoactive material 102a, 202a and the electrolyte 103, 203. In this case, the film should be understood as densely packed reaction products 104 which optically behave as a film. If the reaction products 104 are metallic particulates, the particulates may form a metallic film at the surface between the second chromoactive material 102a, 202a and the electrolyte 103, 203.

The reaction products 104 may be created by a reaction between the electrolyte 103, 203 and the second chromoactive material 102a, 202a. In other words, the type of reaction products 104 may vary depending on the material chosen for the electrolyte 103, 203 and the second chromoactive material 102a, 202a. The change in transmittance may depend on the reaction products. Thus, the material may be adapted for the specific device 100, 200 or for a specific application such that the change in optical transmittance is targeted to the need of the user.

Fig. 4 illustrates a window 400 comprising an electrochromic device 100, 200. The electrochromic device 100, 200 may allow a user to interact with the window 400.

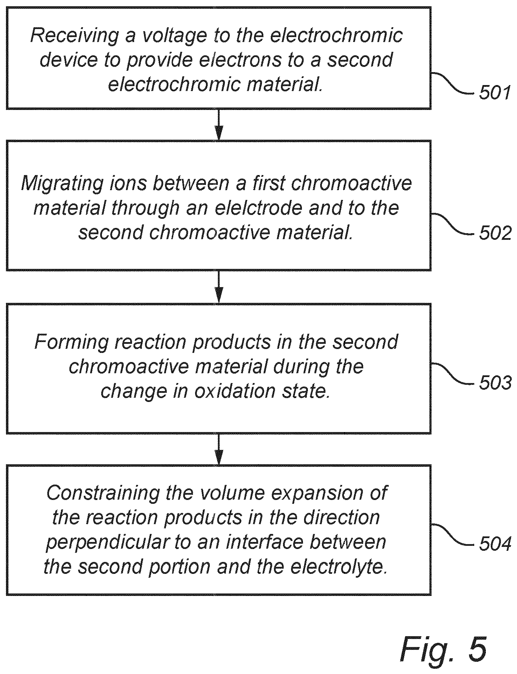

Fig. 5 illustrates a method 500 for changing the transmittance through an electrochromic device 100, 200. The method 500 comprising:
a) receiving 501 a voltage to the electrochromic device 100, 200 to provide electrons to a second electrochromic material 102a, 202a;
b) migrating 502 ions between a first chromoactive material 101a, 201a through an electrolyte 103, 203 and to the second chromoactive material 102a, 202a as a result of the received voltage, wherein the oxidation states of the first chromoactive material 101a, 201a and the second chromoactive material 102a, 202a are changed;
c) forming 503 reaction products 104 in the second chromoactive material 102a, 202a during the change in oxidation state; and
d) constraining 504 the volume expansion of the reaction products 104 in the direction Z perpendicular to an interface I between the second portion 102, 202 and the electrolyte 103, 203;
wherein during the change of oxidation state the transmittance of the first chromoactive material 101a, 201a and/or the second chromoactive material 102a, 202a is changed.

The voltage received by the electrochromic device 100, 200 provides electrons to the second electrochromic material 102a, 202a. This initiates a migration of ions from the first chromoactive material 101a, 201a through an electrolyte 103, 203 and to the second chromoactive material 102a, 202a. During the migration, the oxidation states of the first chromoactive material 101a, 201a and the second chromoactive material 102a, 202a are changed. During the oxidation reaction, reaction products 104 are formed in the second chromoactive material 102a, 202a. The reaction products 104 protrude into the electrolyte 103, 203. It should be understood that the reaction products 104 may be confined only in the second chromoactive material 102a, 202a. In other words, the reaction products 104 have a volume expansion in a direction Z perpendicular to an interface I between the second chromoactive material 102a, 202a and the electrolyte 103, 203. The volume expansion is constrained by the electrolyte 103, 203.

Upon receiving 501 the voltage, the first chromoactive material 101a, 201a may be oxidized and the second chromoactive material 102a, 202a may be reduced. The transmittance of the first chromoactive material 101a, 201a and/or the second chromoactive material 102a, 202a may be reduced.

Upon receiving the voltage 501, the first chromoactive material 101a, 201a may be reduced and the second chromoactive material 102a, 202a may be oxidized. The transmittance of the first chromoactive material 101a, 201a and/or the second chromoactive material 102a, 202a may be increased.

In the above the inventive concept has mainly been described with reference to a limited number of examples. However, as is readily appreciated by a person skilled in the art, other examples than the ones disclosed above are equally possible within the scope of the inventive concept, as defined by the appended claims.

## Claims

1. An electrochromic device (100, 200) comprising:
a first portion (101, 201) comprising a first chromoactive material (101a, 201a);
a second portion (102, 202) comprising a second chromoactive material (102a, 202a);
a solid-state electrolyte (103, 203);
wherein the first portion (101, 201) and the second portion (102, 202) are arranged on opposite sides of the electrolyte (103, 203);
wherein the first chromoactive material (101a, 201a) and the second chromoactive material (102a, 202a) are configured to change oxidation states in response to an applied current, wherein reaction products (104) are generated in the second chromoactive material (102a, 202a) during the change in oxidation state, wherein the electrolyte (103, 203) is configured to constrain the volume expansion of the reaction products (104) in a direction (Z) perpendicular to an interface (I) between the second portion (102, 202) and the electrolyte (103, 203), **characterized in that** the hardness of the electrolyte (103, 203) is greater than the hardness of the reaction products (104).

2. The electrochromic device (100, 200) according to claim 1, wherein the first portion (101, 201) further comprises a first current collector (101b, 201b) being arranged on the opposite side of the first chromoactive material (101a, 201a) compared to the electrolyte (103, 203).

3. The electrochromic device (100, 200) according to any one of claims 1 or 2, wherein the second portion (102, 202) further comprises a second current collector (102b, 202b) being arranged on the opposite side of the second chromoactive material (102a, 202a) compared to the electrolyte (103, 203).

4. The electrochromic device (100, 200) according claims 2 or 3, wherein the first current collector (101b, 201b) and/or the second current collector (102b, 202b) is an oxide, such as an electrically conductive oxide.

5. The electrochromic device (100, 200) according to any one of claims 1 to 4, wherein the second chromoactive material (102a, 202a) is a chromoactive current collector.

6. The electrochromic device (100, 200) according to any one of claims 1 to 5, wherein the electrolyte (103, 203) is lithium phosphorus oxynitride (LiPON) and the second chromoactive material (102a, 202a) is indium tin oxide (ITO).

7. The electrochromic device (100, 200) according to any one of claims 1 to 6, wherein the electrochromic device (100, 200) is a multi-layered structure.

8. A window (400) comprising an electrochromic device (100, 200) according to any one of claims 1-7.

9. A method (500) for changing the transmittance through an electrochromic device (100, 200), the method (500) comprising:
a) receiving (501) a voltage to the electrochromic device (100, 200) to provide electrons to a second electrochromic material (102a, 202a);
b) migrating (502) ions between a first chromoactive material (101a, 201a) through a solid-state electrolyte (103, 203) and to the second chromoactive material (102a, 202a) as a result of the received voltage, wherein the oxidation states of the first chromoactive material (101a, 201a) and/or the second chromoactive material (102a, 202a) are changed;
c) forming (503) reaction products (104) in the second chromoactive material (102a, 202a) during the change in oxidation state; and
d) constraining (504) the volume expansion of the reaction products (104) in the direction (Z) perpendicular to an interface (I) between the second portion (102, 202) and the electrolyte (103, 203);
wherein during the change of oxidation states the transmittance of the first chromoactive material (101a, 201a) and/or the second chromoactive material (102a, 202a) is changed, **characterized in that** the hardness of the electrolyte (103, 203) is greater than the hardness of the reaction products (104).

10. The method (500) according to claim 9, wherein upon receiving the voltage, the first chromoactive material (101a, 201a) is oxidized and the second chromoactive material (102a, 202a) is reduced and wherein the transmittance of the first chromoactive material (101a, 201a) and/or the second chromoactive material (102a, 202a) is reduced.

11. The method (500) according to any one of claims 9 or 10, wherein upon receiving the voltage, the first chromoactive material (101a, 201a) is reduced and the second chromoactive material (102a, 202a) is oxidized and wherein the transmittance of the first chromoactive material (101a, 201a) and/or the second chromoactive material (102a, 202a) is increased.

## Patentansprüche

1. Elektrochrome Vorrichtung (100, 200), umfassend:
einen ersten Abschnitt (101, 201), der ein erstes chromatisch aktives Material (101a, 201a) umfasst;
einen zweiten Abschnitt (102, 202), der ein zweites chromatisch aktives Material (102a, 202a) umfasst;
einen Festkörperelektrolyt (103, 203);
wobei der erste Abschnitt (101, 201) und der zweite Abschnitt (102, 202) auf gegenüberliegenden Seiten des Elektrolyts (103, 203) eingerichtet sind;
wobei das erste chromatisch aktive Material (101a, 201a) und das zweite chromatisch aktive Material (102a, 202a) dazu konfiguriert sind, als Reaktion auf einen angelegten Strom ihre Oxidationszahlen zu ändern, wobei in dem zweiten chromatisch aktiven Material (102a, 202a) während der Abänderung der Oxidationszahl Reaktionsprodukte (104) generiert werden, wobei der Elektrolyt (103, 203) dazu konfiguriert ist, die räumliche Ausdehnung der Reaktionsprodukte (104) in einer Richtung (Z), die zu einer Schnittstelle (I) zwischen dem zweiten Abschnitt (102, 202) und dem Elektrolyt (103, 203), rechtwinklig steht, einzuschränken,
**dadurch gekennzeichnet, dass** die Härte des Elektrolyts (103, 203) größer als die Härte der Reaktionsprodukte (104) ist.

2. Elektrochrome Vorrichtung (100, 200) nach Anspruch 1, wobei der erste Abschnitt (101, 201) ferner einen ersten Stromabnehmer (101b, 201b) umfasst, der auf der gegenüberliegenden Seite des ersten chromatisch aktiven Materials (101a, 201a) im Vergleich zu dem Elektrolyt (103, 203) eingerichtet ist.

3. Elektrochrome Vorrichtung (100, 200) nach einem der Ansprüche 1 oder 2, wobei der zweite Abschnitt (102, 202) ferner einen zweiten Stromabnehmer (102b, 202b) umfasst, der auf der gegenüberliegenden Seite des zweiten chromatisch aktiven Materials (102a, 202a) im Vergleich zu dem Elektrolyt (103, 203) eingerichtet ist.

4. Elektrochrome Vorrichtung (100, 200) nach Anspruch 2 oder 3, wobei der erste Stromabnehmer (101b, 201b) und/oder der zweite Stromabnehmer (102b, 202b) ein Oxid, wie etwa ein elektrisch leitfähiges Oxid, ist/sind.

5. Elektrochrome Vorrichtung (100, 200) nach einem der Ansprüche 1 bis 4, wobei das zweite chromatisch aktive Material (102a, 202a) ein chromatisch aktiver Stromabnehmer ist.

6. Elektrochrome Vorrichtung (100, 200) nach einem der Ansprüche 1 bis 5, wobei der Elektrolyt (103, 203) Lithium-Phosphor-Oxinitrid (LiPON) ist und das zweite chromatisch aktive Material (102a, 202a) Indiumzinnoxid (ITO) ist.

7. Elektrochrome Vorrichtung (100, 200) nach einem der Ansprüche 1 bis 6, wobei die elektrochrome Vorrichtung (100, 200) eine mehrschichtige Struktur ist.

8. Fenster (400), umfassend eine elektrochrome Vorrichtung (100, 200) nach einem der Ansprüche 1 bis 7.

9. Verfahren (500) zum Abändern des Transmissionsgrads durch eine elektrochrome Vorrichtung (100, 200) hindurch, wobei das Verfahren (500) umfasst:
a) Empfangen (501) einer Spannung für die elektrochrome Vorrichtung (100, 200), um einem zweiten elektrochromen Material (102a, 202a) Elektronen bereitzustellen;
b) Migrieren (502) von Ionen zwischen einem ersten chromatisch aktiven Material (101a, 201a) durch einen Festkörperelektrolyt (103, 203) hindurch und bis zu dem zweiten chromatisch aktiven Material (102a, 202a) infolge der empfangenen Spannung, wobei die Oxidationszahlen des ersten chromatisch aktiven Materials (101a, 201a) und/oder des zweiten chromatisch aktiven Materials (102a, 202a) abgeändert werden;
c) Bilden (503) von Reaktionsprodukten (104) in dem zweiten chromatisch aktiven Material (102a, 202a) während der Abänderung der Oxidationszahl; und
d) Einschränken (504) der räumlichen Ausdehnung der Reaktionsprodukte (104) in der Richtung (Z), die rechtwinklig zu einer Schnittstelle (I) zwischen dem zweiten Abschnitt (102, 202) und dem Elektrolyt (103, 203) rechtwinklig steht;
wobei während der Abänderung der Oxidationszahlen der Transmissionsgrad des ersten chromatisch aktiven Materials (101a, 201a) und/oder des zweiten chromatisch aktiven Materials (102a, 202a) abgeändert wird,
**dadurch gekennzeichnet, dass** die Härte des Elektrolyts (103, 203) größer als die Härte der Reaktionsprodukte (104) ist.

10. Verfahren (500) nach Anspruch 9, wobei bei dem Empfang der Spannung das erste chromatisch aktive Material (101a, 201a) oxidiert wird und das zweite chromatisch aktive Material (102a, 202a) reduziert wird, und wobei der Transmissionsgrad des ersten chromatisch aktiven Materials (101a, 201a) und/oder des zweiten chromatisch aktiven Materials (102a, 202a) reduziert wird.

11. Verfahren (500) nach einem der Ansprüche 9 oder 10, wobei bei dem Empfang der Spannung das erste chromatisch aktive Material (101a, 201a) reduziert wird und das zweite chromatisch aktive Material (102a, 202a) oxidiert wird, und wobei der Transmissionsgrad des ersten chromatisch aktiven Materials (101a, 201a) und/oder des zweiten chromatisch aktiven Materials (102a, 202a) erhöht wird.

## Revendications

1. Dispositif électrochrome (100, 200) comprenant :
une première partie (101, 201) comprenant un premier matériau chromoactif (101a, 201a) ;
une deuxième partie (102, 202) comprenant un deuxième matériau chromoactif (102a, 202a) ;
un électrolyte solide (103, 203) ;
dans lequel la première partie (101, 201) et la deuxième partie (102, 202) sont disposées sur des côtés opposés de l'électrolyte (103, 203) ;
dans lequel le premier matériau chromoactif (101a, 201a) et le deuxième matériau chromoactif (102a, 202a) sont configurés pour changer d'états d'oxydation en réponse à un courant appliqué, dans lequel des produits de réaction (104) sont générés dans le deuxième matériau chromoactif (102a, 202a) lors du changement d'état d'oxydation, dans lequel l'électrolyte (103, 203) est configuré pour limiter l'expansion volumique des produits de réaction (104) dans une direction (Z) perpendiculaire à une interface (I) entre la deuxième partie (102, 202) et l'électrolyte (103, 203), **caractérisé en ce que** la dureté de l'électrolyte (103, 203) est supérieure à la dureté des produits de réaction (104).

2. Dispositif électrochrome (100, 200) selon la revendication 1, dans lequel la première partie (101, 201) comprend en outre un premier collecteur de courant (101b, 201b) étant disposé sur le côté opposé du premier matériau chromoactif (101a, 201a) par rapport à l'électrolyte (103, 203).

3. Dispositif électrochrome (100, 200) selon une quelconque des revendications 1 ou 2, dans lequel la deuxième partie (102, 202) comprend en outre un deuxième collecteur de courant (102b, 202b) disposé sur le côté opposé du deuxième matériau chromoactif (102a, 202a) par rapport à l'électrolyte (103, 203).

4. Dispositif électrochrome (100, 200) selon les revendications 2 ou 3, dans lequel le premier collecteur de courant (101b, 201b) et/ou le deuxième collecteur de courant (102b, 202b) est un oxyde, tel qu'un oxyde électriquement conducteur.

5. Dispositif électrochrome (100, 200) selon une quelconque des revendications 1 à 4, dans lequel le deuxième matériau chromoactif (102a, 202a) est un collecteur de courant chromoactif.

6. Dispositif électrochrome (100, 200) selon une quelconque des revendications 1 à 5, dans lequel l'électrolyte (103, 203) est de l'oxynitrure de lithium et de phosphore (LiPON) et le deuxième matériau chromoactif (102a, 202a) est de l'oxyde d'indium-étain (ITO).

7. Dispositif électrochrome (100, 200) selon une quelconque des revendications 1 à 6, dans lequel le dispositif électrochrome (100, 200) est une structure multi-couches.

8. Fenêtre (400) comprenant un dispositif électrochrome (100, 200) selon une quelconque des revendications 1 à 7.

9. Procédé (500) de modification de la transmittance à travers un dispositif électrochrome (100, 200), le procédé (500) comprenant :
a) la réception (501) d'une tension au dispositif électrochrome (100, 200) afin de fournir des électrons à un deuxième matériau électrochrome (102a, 202a) ;
b) la migration des ions (502) entre un premier matériau chromoactif (101a, 201a) à travers un électrolyte solide (103, 203) et vers le deuxième matériau chromoactif (102a, 202a) sous l'effet de la tension reçue, dans lequel les états d'oxydation du premier matériau chromoactif (101a, 201a) et/ou du deuxième matériau chromoactif (102a, 202a) sont modifiés ;
c) la formation (104) de produits de réaction (503) dans le deuxième matériau chromoactif (102a, 202a) lors du changement d'état d'oxydation ;
d) la limitation (504) de l'expansion volumique des produits de réaction (104) dans la direction (Z) perpendiculaire à une interface (I) entre la deuxième partie (102, 202) et l'électrolyte (103, 203) ;
dans lequel, lors du changement d'état d'oxydation, la transmittance du premier matériau chromoactif (101a, 201a) et/ou du deuxième matériau chromoactif (102a, 202a) est modifiée, caractérisé ce que
la dureté de l'électrolyte (103, 203) est supérieure à celle des produits de réaction (104).

10. Procédé (500) selon la revendication 9, dans lequel, lors de la réception de la tension, le premier matériau chromoactif (101a, 201a) est oxydé et le deuxième matériau chromoactif (102a, 202a) est réduit et dans lequel la transmittance du premier matériau chromoactif (101a, 201a) et/ou du deuxième matériau chromoactif (102a, 202a) est réduite.

11. Procédé (500) selon une quelconque des revendications 9 ou 10, dans lequel, lors de la réception de la tension, le premier matériau chromoactif (101a, 201a) est réduit et le deuxième matériau chromoactif (102a, 202a) est oxydé et dans lequel la transmittance du premier matériau chromoactif (101a, 201a) et/ou du deuxième matériau chromoactif (102a, 202a) est augmentée.
